# FASCICULE DE BREVET EUROPEEN

(11) **EP 4 426 567 B1**
(45) Date de publication et mention de la délivrance du brevet: **14.10.2026**
(21) Numéro de dépôt: 22803041.7
(22) Date de dépôt: 25.10.2022
(51) Int. Cl.: B60C 9/00, B60C 9/08, B60C 15/00

(54) **ARMATURES DE CARCASSE DE PNEUMATIQUE POUR AVION**
VERSTÄRKUNGEN FÜR FLUGZEUGREIFENKARKASSEN
AIRCRAFT TIRE CARCASS REINFORCEMENTS

(30) Priorité: 04.11.2021 FR 2111703
(43) Date de publication de la demande: 11.09.2024
(73) Titulaire: COMPAGNIE GENERALE DES ETABLISSEMENTS MICHELIN, 63000 Clermont-Ferrand (FR)
(72) Inventeur: ROMERO DE LA OSA, Marc, 63040 CLERMONT-FERRAND Cedex 9 (FR); DIDANE, Nizar, 63040 CLERMONT-FERRAND Cedex 9 (FR); DEUX, Thierry, 63040 CLERMONT-FERRAND Cedex 9 (FR); GOURDIN, Julie, 63040 CLERMONT-FERRAND Cedex 9 (FR)
(74) Mandataire: M.F.P. Michelin
(86) Numéro de dépôt international: PCT/FR2022/052023
(87) Numéro de publication internationale: WO 2023/079227

(56) Documents cités:
- EP-A1- 2 045 379
- US-A1- 2007 199 640
- US-A1- 2010 024 948

## Description

La présente invention concerne un pneumatique pour avion à armature de carcasse radiale. Ces pneumatiques sont destinés à porter de lourdes charges et à être gonflé à des pressions relativement fortes au-dessus de 10 bars.

Un pneumatique d'avion selon l'invention, a une bande de roulement, une armature de sommet et une armature de carcasse radiale, cette armature de carcasse radiale comportant des couches de carcasse comprenant une pluralité d'éléments de renfort textiles orientés sensiblement radialement (c'est-à-dire faisant un angle compris entre 75° et 105° avec la direction circonférentielle).

L'armature de carcasse est ancrée à au moins une armature de renforcement circonférentiel dans chaque bourrelet, et le plus souvent à une seule appelée tringle. Les éléments de renforcement desdites couches de carcasse sont enroulés autour de ladite tringle de l'intérieur à l'extérieur ou inversement en formant des retournements dont les extrémités respectives sont radialement espacées par rapport à l'axe de rotation du pneumatique.

Les couches d'éléments de renforcement ou câbles, composites ou non, décrites ci-dessus sont obtenues par enrobage de ces câbles dans un mélange caoutchouteux dit mélange de calandrage, le nombre de câbles par centimètre de nappe, mesuré perpendiculairement à la direction desdits câbles étant calculé pour obtenir la résistance à la tension nécessaire.

Des solutions avec des câbles composites ou câbles hybrides ont notamment été présentées par les brevets EP1381525 et EP 2045379A1 et particulièrement des câbles composites formés d'au moins deux filés à haut module d'élasticité et d'un seul filé à bas module d'élasticité, plus précisément de deux filés en polyamide aromatique ou aramide, et d'un filé en polyamide aliphatique (plus précisément en Nylon).

Les filés sont composés de filaments. Par filament en polyamide aromatique ou copolyamide aromatique, on rappelle de manière bien connue qu'il s'agit d'un filament de macromolécules linéaires formées de groupes aromatiques liés entre eux par des liaisons amides dont au moins 85% sont directement liées à deux noyaux aromatiques, et plus particulièrement de fibres en poly (p-phénylène téréphtalamide) (ou PPTA), fabriquées depuis fort longtemps à partir de compositions de filage optiquement anisotropes. Parmi les polyamides aromatiques ou copolyamides aromatiques, on pourra citer les polyarylamides (ou PAA, notamment connu sous la dénomination commerciale Ixef de la société Solvay), le poly(métaxylylène adipamide), les polyphtalamides (ou PPA, notamment connu sous la dénomination commerciale Amodel de la société Solvay), les polyamides semi-aromatiques amorphes (ou PA 6-3T, notamment connu sous la dénomination commerciale Trogamid de la société Evonik), les méta-aramides (ou poly(métaphénylène isophtalamide ou PA MPD-I notamment connu sous la dénomination commerciale Nomex de la société Du Pont de Nemours) ou les para-aramides (ou poly(paraphénylène téréphtalamide ou PA PPD-T notamment connu sous la dénomination commerciale Kevlar de la société Du Pont de Nemours ou Twaron de la société Teijin).

Par filament en polyamide aliphatique, on entend un filament de macromolécules linéaires de polymères ou copolymères contenant des fonctions amides ne présentant pas de cycles aromatiques et pouvant être synthétisés par polycondensation entre un acide carboxylique et une amine. Parmi les polyamides aliphatiques, on pourra citer les nylons PA4.6, PA6, PA6.6 ou encore PA6.10, et notamment le Zytel de la société DuPont, le Technyl de la société Solvay ou le Rilsamid de la société Arkema.

Cependant les câbles composites décrits dans l'état de l'art amenant des augmentations de performance en masse comparativement aux solutions tout en polyamide aliphatique, ne sont pas un optimum notamment pour deux performances essentielles des pneumatiques avions à savoir l'endurance et la masse. Par ailleurs compte tenu de la disponibilité des différents types de filés, il est intéressant de disposer de plusieurs solutions techniques dont une minimisant le taux de polyamide aromatique dans les câbles.

Un des problèmes des câbles hybrides de couches de carcasse avec un faible taux de polyamide aromatique comparativement au polyamide aliphatique est que le nombre de couches de carcasse nécessaire pour supporter la pression nominale est alors beaucoup plus important que pour les solutions comprenant un taux de polyamide aromatique important. Pour un hybride (A330/330 N188) tel que décrit dans l'état de l'art EP1381525 dont les filés de polyamide aromatique ont une densité supérieure à 210 tex et un taux de polyamide aromatique égal à 77%, le nombre de couches de carcasse pour des dimensions courantes est selon la pression nominale de 3 à 5 couches de carcasse. Pour des câbles dont les filés de polyamide aromatique ont une densité inférieure à 210 tex ou le taux de polyamide aromatique serait inférieur à 60%, privilégiant le polyamide aliphatique, le nombre de couches de carcasse nécessaire est près du double posant des problèmes de temps de cycle. Privilégier taux de polyamide aliphatique est en outre intéressant d'un point de vue écologique, la fabrication du polyamide aromatique demandant l'utilisation d'acide sulfurique comme solvant, produit hautement toxique dont il convient de limiter l'usage pour être conforme aux obligations légales et préserver la santé des salariés lors de leur fabrication.

Les inventeurs se donnés pour objectif d'améliorer ces dites performances d'endurance et ou de masse en utilisant des hybrides dont les filés de polyamide aromatique ont une densité inférieure à 210 tex ou le taux de polyamide aromatique serait inférieur à 60%, tout en conservant une vitesse de fabrication correcte.

Cette amélioration est obtenue par un pneumatique pour avion, ayant une bande de roulement, une armature de sommet et une armature de carcasse radiale,
- cette armature de carcasse radiale comportant une pluralité de couches de carcasse comportant des éléments de renfort textiles enrobés de composés caoutchouteux et orientés sensiblement radialement, c'est-à-dire faisant un angle compris entre 75° et 105° avec la direction circonférentielle,
- les couches de carcasse étant ancrées à au moins une armature de renforcement circonférentiel ou tringle dans chaque bourrelet, ayant chacune dans chaque bourrelet une extrémité E, chaque extrémité, E étant à une distance de composé caoutchouteux Epe de la couche de carcasse adjacente la plus proche,
- chaque couche de carcasse passant sous la tringle étant, à son point radialement intérieur au centre de gravité de la tringle à une distance de l'axe de rotation Rt, à une distance radiale Ept de mélange caoutchouteux de la couche de carcasse adjacente la plus proche, et ayant à son point radialement intérieur au centre de gravité de la tringle une épaisseur Et,
- les éléments de renforts des couches de carcasse ayant un diamètre d,
- les éléments de renforts de l'armature de carcasse étant des câbles composites comprenant au moins un filé de polyamide aromatique, dont la force à rupture est FR mesurée selon la norme D885/D885M - 10A (2014) et ces éléments ayant une déformation pour une force appliquée égale à FR/4 au moins égale à 4.8%,
- la ténacité des éléments de renforcement de l'armature de carcasse étant au moins égale à 80 daN/mm²,
- le rapport de l'épaisseur Et de chaque couche de carcasse et du diamètre des éléments de renforts, mesurés au point radialement intérieur au centre de gravité de la tringle, étant au moins égal à 1.6 et au plus égal à 2,
- pour chaque extrémité de chaque couche de carcasse, la distance de mélange caoutchouteux Epe étant au moins égale à 90% et au plus égale à 110% de la distance radiale de mélange caoutchouteux Ept de la couche de carcasse considérée à la couche adjacente la plus proche (0.9*Ept≤Epe≤1.1*Ept),
- la densité linéaire du ou des filés de polyamide aromatique des câbles composites étant au plus égal à 210 tex.

En effet, l'optimisation des couches de carcasse ne consiste pas étonnamment pas à rechercher les éléments de renforcement ayant une bonne tenue à la fatigue et présentant l'effort à rupture le plus élevé possible pour une masse de renfort la plus faible possible. Outre les aspects de résistance à la pression dite d'épreuve qui est égale à quatre fois la pression de service, des recherches sur les conditions d'atterrissage complexes à observer ou à simuler ont montré que quelle que soit la ténacité du renfort, la déformation des pneumatiques dans ces conditions extrêmes, était quasi identique. Dans de telles conditions, il est intéressant d'utiliser des éléments de renforcement tels que lorsque le pneumatique est à un écrasement de plus de 50%, chaque couche de carcasse reste en extension et donc des éléments de renforcement à haute ténacité mais aussi à haute déformation notamment au niveau de la pression d'usage qui est au quart de la pression de rupture. L'expérience a montré qu'il était nécessaire pour optimiser les performances du pneumatique que la déformation des éléments de renforcement des couches de carcasse à la pression d'usage, c'est-à-dire au quart de la force à rupture soit au moins égale à 4.6%. Avec cette déformation en pression, les éléments de renforcement des couches de carcasse ne passent pas en compression lors de l'atterrissage. Lorsque le quart de la force à rupture est au moins égale à 5%, de préférence au moins égale 5.3%, les éléments de renforcement des couches de carcasse ne passent pas en compression lors d'atterrissages compliqués par un vent de travers qui surcharge un côté de l'architecture de la carcasse par rapport à l'autre. Par ailleurs, les modules élastiques des renforts étant plus faibles sur cette plage de sollicitation comparativement aux cycles subis par les couches de carcasse des pneumatiques selon l'état de l'art, les cycles de tension baissent et la résistance à la fatigue des couches de carcasse augmentent. Par ailleurs pour obtenir une pression dite d'épreuve conforme à la pression d'usage pour une masse acceptable, les éléments de renforcement des couches de carcasse doivent avoir une ténacité au moins égale à 80 daN/mm² et préférence au moins égale à 88 daN/mm².

En raison des déplacements des filaments des câbles aux extrémités des couches de carcasse, il est nécessaire de poser des mélanges caoutchouteux dits gommes de bordure afin d'éloigner lesdites extrémités des couche de carcasses les plus proches ce qui augmente le temps de cycle de fabrication. La solution pour conserver une vitesse de fabrication acceptable malgré le nombre de couches de carcasse nécessaires pour tenir la pression, est de ne pas poser en extrémité des couches de carcasse de mélange caoutchouteux dans le bourrelet. Néanmoins pour permettre de séparer les extrémités a minima les couches de carcasse des extrémités des autres couches, il est nécessaire de mettre une épaisseur de calandrage suffisante qui soit au moins égal à 1.6 et au plus égal à 2 diamètres desdits câbles. Ceci est rendu possible par le faible diamètre des câbles visés par l'invention comparativement aux hybrides avec des polyamides aromatiques dont la densité est supérieure à 210 tex.

Il existe un gain induit à cette solution en termes d'endurance concernant la diminution des risques d'écarts de pose entre les gommes de bordures et les extrémités des câbles des couches de carcasse dans le bourrelet observés pour les pneumatiques selon l'état de l'art. Dans une solution incluant des gommes de bordures, il faut poser deux fois plus de produits dans le bourrelet que dans une solution où le calandrage des couches de carcasse suffit à éloigner les extrémités des couches de carcasse adjacentes. Deux fois plus de produits implique deux fois plus de variation de pose des produits et donc des possibilité que le couplage entre l'extrémité de la couche de carcasse considérée et sa gomme de bordure ne soit pas assuré. Ce problème est d'autant plus vrai que dans le bourrelet, les positions relatives des produits posés varient facilement à chaque transfert entre les différents outils de fabrication avant la cuisson. Dans le cas où le découplage est assuré par l'épaisseur du calandrage de chaque couche de carcasse, les variations de posent existent mais pas les variations de pose relative entre les extrémités et les gommes de bordures. Par ailleurs quelle que soit la variation de pose dans le bourrelet notamment ou quel que soit le déplacement des produits avant la cuisson, l'épaisseur de calandrage étant constant, l'extrémité d'une couche de carcasse est toujours à une distance minimale de la couche de carcasse adjacente. Ce gain est d'autant plus élevé que les câbles sont de nature hybride, les filés polyamide aliphatique sont beaucoup plus sensibles en raison de la différence de rigidité à l'usure des filés, si l'un ou plusieurs filés sont en polyamide aromatique.

Une manière d'exprimer qu'il n'existe pas de gomme de bordure entre les extrémités libres des couches de carcasse et les autres couches de carcasse est de vérifier que l'épaisseur du calandrage est constante à l'extrémité des couches de carcasse et sous la tringle en tenant compte des écarts dus à la fabrication. Une telle condition s'exprime ainsi : pour chaque extrémité de chaque couche de carcasse, la distance de mélange caoutchouteux Epe est au moins égale à 90% et au plus égale à 110% de la distance radiale de mélange caoutchouteux Ept de la couche de carcasse considérée à la couche adjacente la plus proche mesurée au point radialement intérieur au centre de gravité de la tringle.

Au niveau de la tringle, pour les couches de carcasse la plus radialement extérieure et la plus radialement intérieure, il existe une seule distance Ept depuis le bord du câble de la couche de carcasse considérée vers le bord du câble le plus proche. Pour les autres couches de carcasse, chaque couche de carcasse a deux couches de carcasse adjacentes, il existe donc deux distances possibles mais un seul minimum. On prendra ces distances radiales Ept de mélanges caoutchouteux au niveau de la tringle, au point radialement intérieur au centre de gravité de la tringle, c'est-à-dire à l'intersection de la couche de carcasse considérée avec le plan perpendiculaire à l'axe de rotation et passant par le centre de gravité de la tringle., la plus faible des deux distances possibles aux deux couches de carcasses adjacentes. Les mesures des épaisseurs de mélange caoutchouteux se font depuis le dos du câble considéré vers le dos du câble le plus proche afin de ne mesurer en aucun cas l'épaisseur du câble..

Au niveau des extrémités du bourrelet, selon le type de pose choisi et des positions des extrémités, chaque extrémité des couches de carcasse a une ou deux couches de carcasse adjacente. Pour les extrémités où il n'existe qu'une couche de carcasse de carcasse adjacente, la mesure est triviale depuis le dos du câble à l'extrémité de la couche de carcasse considérée vers le dos du câble le plus proche. Pour les extrémités où il y a deux couches de carcasse adjacentes et donc deux distances mesurables, la distance considérée pour Epe sera la plus faible des deux distances mesurables.

Dans un souci de cohérence, toutes les mesures d'épaisseur de mélanges ou composés caoutchouteux entre deux couches de carcasse adjacentes, ou de distance de composé de caoutchouteux, se font depuis le dos d'un câble de la première couche vers le dos du câble le plus proche de la couche adjacente. Ceci est vrai pour la distance de composé caoutchouteux Epe en extrémité de chaque couche de carcasse, pour la distance radiale Ept de mélange caoutchouteux de chaque couche de carcasse à la couche de carcasse adjacente la plus proche, pour la distance radiale Eps de mélange caoutchouteux de chaque couche de carcasse à la couche de carcasse adjacente la plus proche au sommet.

La solution de l'invention permet de conserver le même temps de cycle de fabrication qu'une solution avec des câbles où la densité de polyamide aromatique est supérieure à 210tex avec des épaisseurs de calandrage standard.

Préférentiellement, le pneumatique d'avion selon l'invention est tel que les éléments de renforcement radiaux des couches de carcasse de l'armature de carcasse sont des câbles composites dont la Force à rupture est FR mesurée selon la norme D885/D885M - 10A (2014) et ces éléments de renforcement ont une déformation pour une force appliquée égale à FR/4 au plus égale à 6.5%. Au-delà d'une telle valeur, le pneumatique se déforme excessivement à la pression nominale. Pour limiter l'encombrement, il est alors nécessaire de limiter la largeur du sommet et donc le volume de gomme à user du pneumatique, ce qui n'est pas dans la logique de l'invention.

Avantageusement la ténacité des éléments de renforcement des couches de carcasse de l'armature de carcasse est au plus égale à 120 daN/mm². Une ténacité supérieure exigerait un taux de polyamide aromatique important contraire au but de l'invention et également un taux de polyamide aliphatique trop faible ne permettant plus à celui-ci de jouer son rôle de protection de l'intégrité du câble notamment en compression, rôle essentiel pour un renfort d'une couche de carcasse.

Eviter de poser les gommes de bordures au niveau des extrémités dans le bourrelet permet de respecter des temps de fabrication acceptable. Pour les pneumatiques avion, il est également possible de disposer de gommes de liaison entre les différentes couches de carcasse sous le sommet. En effet la masse étant un tel problème dans le monde des pneumatiques avion, qu'usuellement les couches de carcasse ont une épaisseur de calandrage très faible, suffisante au niveau du bourrelet et les flancs mais telle que lors de la conformation l'épaisseur desdits calandrage est quasi nulle sous le sommet. Par conformation on entend la déformation avant cuisson des couches de carcasse sous le sommet qui passe du rayon de pose égal au rayon de la tringle à un rayon conformé proche du rayon maximal de la couche de carcasse après cuisson. Les câbles en viennent à se toucher sous le sommet, ce qui est pénalisant pour l'endurance. Dès lors il est courant d'ajouter des couches de gomme de liaison sous le sommet. Ceci est inutile avec l'invention. L'absence de gomme de liaison sous le sommet est vérifiable en comparant les épaisseurs de calandrage sous la tringle et sous le sommet tout en tenant compte des rapports des rayons entre ces deux points du pneumatique.

Cette exigence, qui permet des gains substantiel en temps de fabrication, est donc que chaque couche de carcasse passant sous le sommet à une distance radiale maximale Rm et étant à une distance radiale Eps de mélange caoutchouteux de la couche de carcasse adjacente la plus proche, pour chaque couche de carcasse, la distance radiale, ou épaisseur, de mélange caoutchouteux Ept à la couche de carcasse adjacente la plus proche, au point radialement intérieur au centre de gravité de la tringle, est au moins égale à 90% et au plus égale à 110% à la distance radiale de mélange caoutchouteux Eps de la couche de carcasse considérée à la couche adjacente la plus proche au sommet multipliée par le rapport du rayon Rt de la couche de carcasse considérée sous la tringle sur le rayon Rm de la couche de carcasse considérée sous le sommet à savoir que quelle que soit la couche de carcasse considérée $\left(0.9*Eps*\left(Rm/Rt\right)\leq Ept\leq 1.1*Eps*\left(Rm/Rt\right)\right) .$

Avantageusement le diamètre du pneumatique avion selon l'invention est au plus égal à 1450 mm. En effet les pneumatiques de plus gros diamètre ont des conditions d'usage telles que l'invention n'amène pas de gains très significatifs.

Il est avantageux que le polyamide aromatique représente moins de 60% de la densité des éléments de renforcement et de préférence moins de 50% de la densité des éléments de renforcement pour des raisons écologiques.

Préférentiellement les éléments de renforcement des couches de carcasse sont des câbles composites composés un filé de polyamide aromatique d'une masse linéique comprise entre 160 et 180 g au km et deux filés de polyamide aliphatique d'une masse linéique comprise entre 130 et 150 g au km, de torsion comprise entre 290 et 370 tours par mètre, les éléments de renforcement de l'armature de carcasse étant répartis en couches de carcasse et étant disposés dans lesdites couches de carcasse selon un pas compris entre 0.6 mm et 0.9 mm.

Avantageusement les éléments de renforcement des couches de carcasse sont des câbles composites composés un filé de polyamide aromatique d'une masse linéique comprise entre 160 et 180 g au km et d'un filé de polyamide aliphatique d'une masse linéique comprise entre 130 et 150 g au km, de torsion comprise entre 340 et 420 tours par mètre, les éléments de renforcement de l'armature de carcasse étant répartis en couches de carcasse et étant disposés dans lesdites couches de carcasse selon un pas compris 0.6 mm et 0.9 mm, de préférence entre 0.75 mm et 0.85 mm.

Ainsi renforcées de câbles constitués de filés ayant des modules d'élasticité différents aux faibles déformations et plus faibles que ceux présentés dans l'état de l'art, amenant une plus grande déformation à la pression d'usage, les couches de l'armature de carcasse sont, de manière surprenante, plus à mêmes de résister aux cycles d'usage.

Il est connu, que dans le cas d'un pneumatique pour avion, les câbles composites utilisés dans le pneumatique selon l'invention soient formés d'au moins deux filés à haut module d'élasticité et d'un seul filé à bas module d'élasticité, lesdits câbles présentant le meilleur compromis entre les deux propriétés que sont l'allègement du pneumatique et la résistance desdits câbles à la fatigue. Les trois filés ci-dessus sont individuellement surtordus de manière appropriée et sont ensuite retordus ensemble pour former l'élément de renforcement. Néanmoins l'expérience montre de façon étonnante qu'un pneumatique selon l'invention, dans lequel les câbles des couches de carcasse sont constitués, d'un filé à haut module d'élasticité et d'un ou deux filés à bas module d'élasticité, a une performance intéressante tout en permettant de limiter l'utilisation du filé à haut module.

Pour une meilleure compréhension de l'invention, les caractéristiques de l'invention sont illustrées par les figures 1 à 4 schématiques et non représentées à l'échelle. La figure 1 représente une demi-coupe méridienne du pneumatique selon l'invention. Les figures 2 et 3 représentent un des bourrelets du pneumatique. La figure 4 représente une partie du sommet du pneumatique autour du plan circonférentiel médian ou équateur perpendiculaire à l'axe de rotation du pneumatique passant par le centre de la bande de roulement. L'invention peut comprendre plus de 4 couches de carcasse. Le choix de 4 couches de carcasse pour les dessins sert uniquement à mieux comprendre l'invention en ne surchargeant pas les dessins.

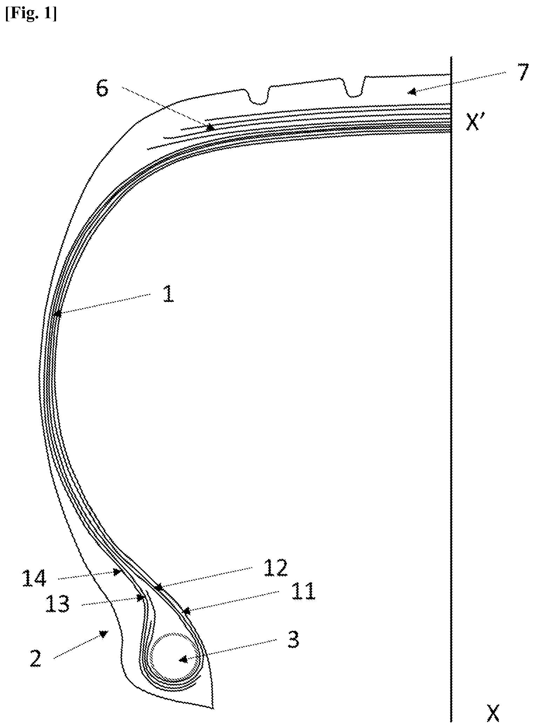

La figure 1 représente une coupe transversale de l'armature de carcasse 1 d'un pneumatique avion selon l'invention formée de quatre couches de câbles textiles radiaux (11, 12, 13, 14). Il faut entendre par câbles radiaux d'un pneumatique d'avion des câbles faisant avec la direction circonférentielle des angles pouvant être compris dans l'intervalle 90° ± 15°. Les quatre couches sont enroulées dans chaque bourrelet (2) autour d'une tringle (3), deux étant enroulées de telle sorte que leurs extrémités soient radialement intérieures à la tringles (13, 14), les deux autres de telle sorte que leurs extrémités soient radialement extérieures à la tringle (11, 12) et ce dans chaque bourrelet. Une bande de roulement 7, des couches extérieures du sommet 6, complètent, comme connu, la constitution du pneumatique étudié.

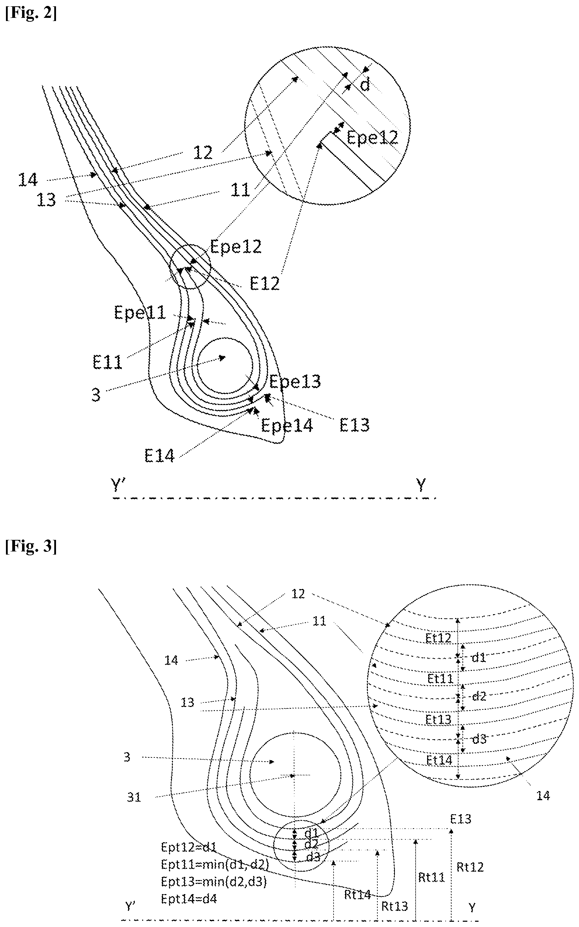

La figure 2 représente une coupe transversale d'un des bourrelets du pneumatique selon l'invention avec la tringle (3), les quatre couches de carcasse (11,12,13,14), chacune ayant une extrémité E (respectivement E11,E12,E13,E14) située à une distance Epe (respectivement Epe11, Epe12, Epe13, Epe14) de la couche de carcasse la plus proche. Un zoom sur l'extrémité E12 montre également le diamètre d du câble en l'occurrence de la couche de carcasse 11et la mesure de l'épaisseur des mélanges, c'est-à-dire la distance Epe12 depuis le bord du câble au niveau de l'extrémité E12 jusqu'au bord du câble de la couche de carcasse la plus proche en l'occurrence le brin de la couche de carcasse 12 le plus axialement intérieur ou brin aller.

La figure 3 représente en coupe transversale le même bourrelet avec la tringle (3), les quatre couches de carcasse (11,12,13,14), chacune étant à une distance Ept (respectivement Ept11, Ept12, Ept13, Ept14) de la couche de carcasse adjacente la plus proche en leur point radialement intérieur au centre de gravité de la tringle (31), chacune étant à ce dit point à une distance axiale Rt (respectivement Rt11, Rt12, Rt13, Rt14) de l'axe de rotation du pneumatique. Pour la couche de carcasse la plus radialement extérieure (14) et la plus radialement intérieure (12) sous la tringle, la couche de carcasse la plus proche est déterminée de façon évidente (respectivement 13 et 11) et donc également l'épaisseur radiale de mélange respectivement d1 et d3. Les autres couches de carcasse ont toutes deux couches de carcasse adjacentes, dans ce cas la distance Ept (Ept11, Ept13) de mélange caoutchouteux à la couche de carcasse adjacente la plus proche est le minimum entre les deux distances de la couche de carcasse considérée aux couches de carcasse adjacentes (Ept11=min(d1, d2) ; Ept13=min(d2, d3). Un zoom sur les couches de carcasse en aplomb du centre de gravité de la tringle montre également la mesure des épaisseurs radiales d1, d2, d3 depuis le dos du câble d'une couche jusqu'au dos du câble de la couche de carcasse la plus proche, permettant l'évaluation des distances radiales Ept11, Ept12, Ept13, Ept14. Le zoom montre également la mesure des épaisseurs Et11, Et12, Et13, Et14 de chaque couche de carcasse au point radialement intérieur au centre de gravité de la tringle, chaque courbe en pointillé montrant la limite entre deux couches de carcasse.

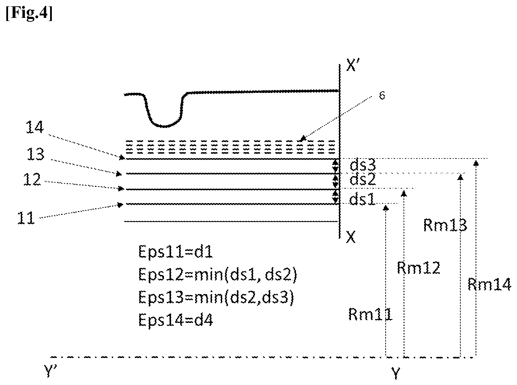

La figure 4 représente une coupe transversale de sommet du pneumatique avion près du plan équateur les couches de sommet 6 et les quatre couches de carcasse (11,12,13,14). Sur une coupe axiale selon un plan comprenant l'axe du pneumatique, chacune des quatre couches de carcasse (11,12,13,14) coupe le plan équateur en un point de rayon Rm, (respectivement Rm11, Rm12, Rm13, Rm14). La distance de mélange caoutchouteux de chaque couche de carcasse à la couche de carcasse la plus proche est notée Eps (Eps 11,Eps12,Eps13,Eps14). Pour la couche de carcasse la plus radialement extérieure (14) et la plus radialement intérieure (11) au sommet, la couche de carcasse la plus proche est déterminée de façon évidente respectivement 13 et 12 et donc également l'épaisseur radiale de mélange (respectivement d1 et d3). Toutes les autres couches de carcasse ont deux couches de carcasse adjacentes, dans ce cas la distance Eps (Eps12, Eps13) de mélange caoutchouteux à la couche de carcasse adjacente la plus proche est le minimum entre les deux distances de la couche de carcasse considérée aux couches de carcasse adjacentes (Eps12=min(d1, d2) ; Eps13=min(d2, d3).

Les mesure sont faites soit par des mesures non destructives (tomographie...) sur un pneumatique monté sur une jante standard à une pression de 1 bar, soit sur une coupe axiale du pneumatique dont les bourrelets sont mis selon un angle identique à la jante standard et à un même écartement, pratique connue de l'homme de l'art. Les rayons (Rm, Rt) des couches de carcasse sous la tringle ou sous le sommet sont mesurées au niveau de la fibre moyenne de chaque couche de carcasse. Pour la mesure des distances Et des couches de carcasse sous la tringle s'il n'est pas possible de différencier les différents mélanges de calandrage d'une couche à l'autre, on considèrera que chaque couche de carcasse comprend la moitié de l'épaisseur du mélange de calandrage entre les deux câbles des deux couches de carcasse considérées.

L'invention a été testée sur un pneumatique de dimension normalisée 52X21R22 38PR. Elle est comparée à deux pneumatiques témoins :
- un pneumatique T1 dont les couches de carcasse sont constituées de câbles en polyamide aliphatique.
- un pneumatique T2 dont les couches de carcasse de carcasse comportent des câbles hybrides.

Pour le pneumatique témoin T1, selon l'état de l'art, les six couches d'armature de carcasse du pneumatique d'avion considéré, sont formées trois filés en polyamide aliphatique (plus précisément en Nylon) dont le titre est égal à 280 tex, ledit filé étant individuellement surtordu d'une torsion en S de 215 tours/mètre. Les trois filés ainsi préalablement tordus sur eux-mêmes sont ensuite retordus ensemble avec une torsion en Z de 215 tours/mètre pour former le câble prêt à l'usage en couches. Dans le cas présent, le câble employé a une ténacité sensiblement égale à 62.4 daN/mm² et une déformation à FR/4 proche de 17.3%11%. Les renforts sont disposés selon un pas de 1.33 mm. le taux de polyamide aromatique des couches de carcasse est donc de 0%. Le diamètre des câbles du pneumatique témoin est de 1.19 mm. L'épaisseur Et de chaque couche de carcasse au point radialement intérieur au centre de gravité de la tringle est égale à 1.67 mm. Le rapport de l'épaisseur Et des couches de carcasse et le diamètre des éléments de renforts est donc égal à 1.4. Dans le bourrelet, les extrémités des couches de carcasse sont éloignées de la couche de carcasse la plus proche grâce à des gommes dites de découplage de 0.8 mm d'épaisseurs insérées entre lesdites extrémités et les couches de carcasse adjacentes correspondantes. Cette étape est nécessaire à l'endurance du bourrelet et augmente le temps de fabrication. (En moyenne Epe=2.5*Ept). Au niveau du sommet pour permettre une distance minimale entre les couches de carcasse est disposée entre les couches de carcasse une gomme de découplage sur au moins la largeur du sommet d'une épaisseur radiale égale à 0.8 mm.

Pour le pneumatique témoin T2, selon l'état de l'art, les quatre couches d'armature de carcasse du pneumatique d'avion considéré, sont formées de câbles composites constitués de deux filés en polyamide aromatique, chaque filé ayant un titre de 330 tex, individuellement surtordu d'une torsion en S de 270 tours/mètre, et d'un filé en polyamide aliphatique (plus précisément en Nylon) dont le titre est égal à 188 tex, ledit filé étant individuellement surtordu d'une torsion en S de 270 tours/mètre. Les trois filés ainsi préalablement tordus sur eux-mêmes sont ensuite retordus ensemble avec une torsion en Z de 270 tours/mètre pour former le câble prêt à l'usage en couches. Dans le cas présent, le câble employé a une ténacité sensiblement égale à 128 daN/mm² et une déformation à FR/4 proche de 4.2%. Les renforts sont disposés selon un pas de 1.2 mm. le taux de polyamide aromatique des couches de carcasse est donc de 78%. Le diamètre des câbles du pneumatique témoin est de 1.1 mm, l'épaisseur Et de chaque couche de carcasse au point radialement intérieur au centre gravité de la tringle est égale à 1.6 mm. Le rapport de l'épaisseur Et des couches de carcasse et le diamètre des éléments de renforts est donc égal à 1.45. Dans le bourrelet, les extrémités des couches de carcasse sont éloignées de la couche de carcasse la plus proche grâce à des gommes dites de découplage de 0.8 mm d'épaisseurs insérées entre lesdites extrémités et les couches de carcasse adjacentes correspondantes. Cette étape est nécessaire à l'endurance du bourrelet et augmente le temps de fabrication. (En moyenne Epe=2.5*Ept). Au niveau du sommet pour permettre une distance minimale entre les couches de carcasse est disposée entre les couches de carcasse une gomme de découplage sur au moins la largeur du sommet d'une épaisseur radiale égale à 0.8 mm.

L'invention est testée avec des câbles composites constitués d'un filé en polyamide aromatique, ayant un titre de 167 tex, surtordu d'une torsion en S de 380 tours/mètre, et d'un filé en polyamide aliphatique (plus précisément en Nylon) dont le titre est égal à 140 tex, ledit filé étant surtordu d'une torsion en S de 380 tours/mètre. Les deux filés ainsi préalablement tordus sur eux-mêmes sont ensuite retordus ensemble avec une torsion en Z de 380 tours/mètre pour former le câble prêt à l'usage en couches. Dans le cas présent, le câble employé a une ténacité sensiblement égale à 96 daN/mm² et une déformation à FR/4 proche de 5% et a un diamètre de 0.66 mm. Les renforts sont disposés selon un pas de 0,79 mm. Le taux de polyamide aromatique de la couche de carcasse est égal à 54%.

Le pneumatique selon l'invention comprend 8 couches de carcasse d'épaisseur 1.33 mm mesurée au point radialement intérieur au centre de gravité de la tringle. Le rapport de l'épaisseur Et des couches de carcasse et le diamètre des éléments de renforts est donc égal à 1.68. Aucune gomme de découplage n'est mise dans le bourrelet au niveau des extrémités des couches de carcasse, l'épaisseur des gommes de calandrage de 0.45 mm chacune étant suffisante pour découpler les extrémités de la carcasse des couches de carcasse adjacentes. Il n'est disposé aucune gomme de découplage au niveau du sommet. De ce fait, le temps de fabrication est sensiblement identique au pneumatique témoin en raison de l'absence de pose des gommes de découplage dans le bourrelet et dans le sommet et ce malgré l'augmentation du nombre de couches de carcasse. Les épaisseurs de composés caoutchouteux entre les câbles des couches de carcasse corrigées des différences de rayons restent constantes entre le sommet et le bourrelet tout en prenant en compte les tolérances de fabrication (0.9*Eps*(Rm/Rt)≤Ept≤1.1*Eps*(Rm/Rt)).

Dans les cas présentés, pour chaque pneumatique, toutes les couches de carcasse utilisent le même câble avec le même pas et les mêmes épaisseurs de mélanges caoutchouteux sans que cela ne soit une nécessité de l'invention, la densité pouvant être différentes selon les couches au besoin.

Les mélanges caoutchouteux de, qui enrobent les câbles composites des couches de carcasse sont identiques pour le pneumatique témoin et le pneumatique selon l'invention. Il en est de même pour les couches de sommet et la bande de roulement.

D'après nos simulation numériques, un pneumatique selon l'invention tel que décrit ci-dessus serait testé avec succès suivant la norme TSO C62e testant notamment l'endurance du pneumatique. Comparativement au pneumatique témoin T1 de même dimension, l'allègement du pneumatique selon l'invention 1 est de 5.5 kg, et permet d'augmenter le nombre d'atterrissage de 5%, ce qui démontre l'intérêt de ces câbles permettant de diminuer la masse des enveloppes ou d'augmenter le nombre d'atterrissages de la carcasse.

D'après nos simulation numériques et notamment les valeurs de taux de compression des couches de carcasse, comparativement au pneumatique témoin T2 de même dimension, l'endurance du pneumatique selon l'invention serait de 10% sur la déchéance de la force à rupture après un roulage sur volant correspondant à du taxiage.

## Revendications

1. Pneumatique pour avion, ayant une bande de roulement (7), une armature de sommet (6) et une armature de carcasse radiale (1),
• cette armature de carcasse radiale (1) comportant **une pluralité de couches de carcasse comportant des éléments de renfort textiles enrobés de composés caoutchouteux** et orientés sensiblement radialement, c'est-à-dire faisant un angle compris entre 75° et 105° avec la direction circonférentielle,
• les couches de carcasse étant ancrées à au moins une armature de renforcement circonférentiel ou tringle (3) dans chaque bourrelet (2), ayant chacune dans chaque bourrelet une extrémité E (E11, E12, E13, E14) chaque extrémité , E (E11, E12, E13, E14) étant à une distance de composé caoutchouteux Epe (Epe11, Epe12, Epe13, Epe14) de la couche de carcasse adjacente la plus proche,
• chaque couche de carcasse passant sous la tringle étant, à son point radialement intérieur au centre de gravité (31) de la tringle à une distance de l'axe de rotation Rt (Rt11, Rt12, Rt13, Rt14), à une distance radiale Ept (Ept11,Ept12, Ept13, Ept14) de mélange caoutchouteux de la couche de carcasse adjacente la plus proche, et ayant à son point radialement intérieur au centre de gravité de la tringle (31) une épaisseur Et (Et11, Et12, Et13, Et14),
• Les éléments de renforts des couches de carcasse ayant un diamètre d,
• **caractérisé en ce que** les éléments de renforts de l'armature de carcasse (1) sont des câbles composites comprenant au moins un filé de polyamide aromatique, dont la Force à rupture est FR mesurée selon la norme D885/D885M - 10A (2014) et ces éléments ont une déformation pour une force appliquée égale à FR/4 au moins égale à 4.8%,
• **en ce que** la ténacité des éléments de renforcement de l'armature de carcasse est au moins égale à 80 daN/mm²,
• **en ce que** le rapport de l'épaisseur Et (Et11, Et12, Et13, Et14) de chaque couche de carcasse et du diamètre des éléments de renforts, mesurés au point radialement intérieur au centre de gravité (31) de la tringle(3), est au moins égal à 1.6 et au plus égal à 2,
• **en ce que** pour chaque extrémité de chaque couche de carcasse, la distance de mélange caoutchouteux Epe (Epe11, Epe12, Epe13, Epe14) est au moins égale à 90% et au plus égale à 110% de la distance radiale de mélange caoutchouteux Ept (Ept11,Ept12, Ept13, Ept14) de la couche de carcasse considérée à la couche adjacente la plus proche (0.9*Ept≤Epe≤1.1*Ept),
• **Et en ce que** la densité linéaire du ou des filés de polyamide aromatique des câbles composites est au plus égal à 210 tex.

2. Pneumatique pour avion selon la revendication 1 dans lequel les éléments de renforcement radiaux de l'armature de carcasse (1) ont une déformation pour une force appliquée égale à FR/4 au moins égale à 5.3%.

3. Pneumatique pour avion selon l'une quelconque des revendications précédentes dans lequel les éléments de renforcement radiaux de l'armature de carcasse (1) sont des câbles composites dont la Force à rupture est FR mesurée selon la norme D885/D885M - 10A (2014) et ces éléments ont une déformation pour une force appliquée égale à FR/4 au plus égale à 6,5%.

4. Pneumatique pour avion selon l'une quelconque des revendications précédentes dans lequel la ténacité des éléments de renforcement de l'armature de carcasse est au plus égale à 120 daN/mm².

5. Pneumatique pour avion selon l'une quelconque des revendications précédentes, chaque couche de carcasse passant sous le sommet à une distance radiale maximale Rm (Rm11,Rm12, Rm13, Rm14) et étant à une distance radiale Eps (Eps11,Eps12, Eps13, Eps14) de mélange caoutchouteux de la couche de carcasse adjacente la plus proche, dans lequel pour chaque couche de carcasse au point radialement intérieur au centre de gravité (31) de la tringle, la distance radiale de mélange caoutchouteux Ept (Ept11, Ept12, Ept13, Ept14) à la couche de carcasse adjacente la plus proche est au moins égale à 90% et au plus égale à 110% de la distance radiale de mélange caoutchouteux Eps (Eps11,Eps12, Eps13, Eps14) de la couche de carcasse considérée à la couche adjacente la plus proche au sommet multipliée par le rapport des rayons Rt (Rt11, Rt12, Rt13, Rt14) sur Rm (Rm11,Rm12, Rm13, Rm14) (quelle que soit la couche de carcasse considérée 0.9*Eps*(Rm/Rt)≤Ept≤1.1*Eps*(Rm/Rt)).

6. Pneumatique pour avion selon l'une quelconque des revendications précédentes dans lequel le diamètre est au plus égal à 1450 mm.

7. Pneumatique pour avion selon l'une quelconque des revendications précédentes dans lequel le polyamide aromatique représente moins de 60% de la densité des éléments de renforcement et de préférence moins de 50% de la densité des éléments de renforcement.

8. Pneumatique pour avion selon l'une quelconque des revendications précédentes dans lequel les éléments de renforcement de l'armature de carcasse sont des câbles composites composés d'un filé de polyamide aromatique d'une masse linéique comprise entre 160 et 180 g au km et de deux filés de polyamide aliphatique d'une masse linéique comprise entre 130 et 150 g au km, de torsions comprises entre 290 et 370 tours par mètres, les éléments de renforcement de l'armature de carcasse étant répartis en couches de carcasse et étant disposés dans lesdites couches de carcasse selon un pas compris entre 0.6 mm et 0.9 mm.

9. Pneumatique pour avion selon l'une quelconque des revendications 1 à 7 dans lequel les éléments de renforcement de l'armature de carcasse sont des câbles composites composés d'un filé de polyamide aromatique d'une masse linéique comprise entre 160 et 180 g au km et d'un filé de Polyamide aliphatique d'une masse linéique comprise entre 130 et 150 g au km, de torsions comprises entre 340 et 420 tours par mètres, les éléments de renforcement de l'armature de carcasse étant répartis en couches de carcasse et étant disposés dans lesdites couches de carcasse selon un pas compris entre 0.6 mm et 0.9 mm, de préférence entre 0.75 mm et 0.85 mm.

## Patentansprüche

1. Luftreifen für ein Flugzeug, welcher einen Laufstreifen (7), eine Gürteleinlage (6) und eine Radialkarkasseneinlage (1) aufweist,
• wobei diese Radialkarkasseneinlage (1) eine Mehrzahl von Karkassenlagen umfasst, die textile Verstärkungselemente umfassen, die mit Kautschukverbindungen umhüllt sind und im Wesentlichen radial ausgerichtet sind, d. h., einen Winkel zwischen 75° und 105° mit der Umfangsrichtung bilden,
• wobei die Karkassenlagen an mindestens einer umfänglichen Verstärkungseinlage oder einem Wulstkern (3) in jeder Wulst (2) verankert sind, wobei jede in jeder Wulst ein Ende E (E11, E12, E13, E14) aufweist, wobei jedes Ende E (E11, E12, E13, E14) in einem Kautschukverbindungsabstand Epe (Epe11, Epe12, Epe13, Epe14) von der nächstgelegenen benachbarten Karkassenlage ist,
• wobei jede unter dem Wulstkern verlaufende Karkassenlage an ihrem radial innerhalb des Schwerpunkts (31) des Wulstkerns gelegenen Punkt in einem Abstand von der Drehachse Rt (Rt11, Rt12, Rt13, Rt14) ist, in einem radialen Kautschukmischungsabstand Ept (Ept11, Ept12, Ept13, Ept14) von der der nächstgelegenen benachbarten Karkassenlage ist und an ihrem radial innerhalb des Schwerpunkts des Wulstkerns (31) gelegenen Punkt eine Dicke Et (Et11, Et12, Et13, Et14) aufweist,
• wobei die Verstärkungselemente der Karkassenlagen einen Durchmesser d aufweisen,
• **dadurch gekennzeichnet, dass** die Verstärkungselemente der Karkasseneinlage (1) Verbundkorde sind, die mindestens einen Faden aus aromatischem Polyamid umfassen, dessen Reißkraft FR ist, gemessen nach der Norm D885/D885M - 10A (2014), und diese Elemente eine Verformung bei einer ausgeübten Kraft gleich FR/4 von mindestens 4,8 % aufweisen,
• dass die Festigkeit der Verstärkungselemente der Karkasseneinlage mindestens 80 daN/mm² beträgt,
• dass das Verhältnis der Dicke Et (Et11, Et12, Et13, Et14) jeder Karkassenlage und des Durchmessers der Verstärkungselemente, gemessen an dem radial innerhalb des Schwerpunkt (31) des Wulstkerns (3) gelegenen Punkt, mindestens 1,6 und höchstens 2 beträgt,
• dass bei jedem Ende jeder Karkassenlage der Kautschukmischungsabstand Epe (Epe11, Epe12, Epe13, Epe14) mindestens 90 % und höchstens 110 % des radialen Kautschukmischungsabstands Ept (Ept11, Ept12, Ept13, Ept14) der betrachteten Karkassenlage zu der nächstgelegenen benachbarten Lage beträgt (0,9*Ept≤Epe≤1,1*Ept),
• und dass die lineare Dichte des oder der Fäden aus aromatischem Polyamid der Verbundkorde höchstens 210 Tex beträgt.

2. Luftreifen für ein Flugzeug nach Anspruch 1, wobei die radialen Verstärkungselemente der Karkasseneinlage (1) eine Verformung für eine ausgeübte Kraft gleich FR/4 von mindestens 5,3 % aufweisen.

3. Luftreifen für ein Flugzeug nach einem der vorhergehenden Ansprüche, wobei die radialen Verstärkungselemente der Karkasseneinlage (1) Verbundkorde sind, deren Reißkraft FR ist, gemessen nach der Norm D885/D885M - 10A (2014), und diese Elemente eine Verformung bei einer ausgeübten Kraft gleich FR/4 von höchstens 6,5 % aufweisen.

4. Luftreifen für ein Flugzeug nach einem der vorhergehenden Ansprüche, wobei die Festigkeit der Verstärkungselemente der Karkasseneinlage höchstens 120 daN/mm² beträgt.

5. Luftreifen für ein Flugzeug nach einem der vorhergehenden Ansprüche, wobei jede Karkassenlage unter dem Gürtel in einem maximalen radialen Abstand Rm (Rm11, Rm12, Rm13, Rm14) verläuft und in einem radialen Kautschukmischungsabstand Eps (Eps11, Eps12, Eps13, Eps14) von der nächstgelegenen benachbarten Karkassenlage ist, wobei bei jeder Karkassenlage an dem radial innerhalb des Schwerpunkt (31) des Wulstkerns gelegenen Punkt der radiale Kautschukmischungsabstand Ept (Ept11, Ept12, Ept13, Ept14) zu der nächstgelegenen benachbarten Karkassenlage mindestens 90 % und höchstens 110 % des radialen Kautschukmischungsabstands Eps (Eps11, Eps12, Eps13, Eps14) der betrachteten Karkassenlage zu der zum Gürtel nächstgelegenen benachbarten Lage multipliziert mit dem Verhältnis der Radien Rt (Rt11, Rt12, Rt13, Rt14) zu Rm (Rm11, Rm12, Rm13, Rm14) beträgt (unabhängig von der betrachteten Karkassenlage 0,9*Eps*(Rm/Rt) ≤Ept≤1,1*Eps*(Rm/Rt)).

6. Luftreifen für ein Flugzeug nach einem der vorhergehenden Ansprüche, wobei der Durchmesser höchstens 1450 mm beträgt.

7. Luftreifen für ein Flugzeug nach einem der vorhergehenden Ansprüche, wobei das aromatische Polyamid weniger als 60 % der Dichte der Verstärkungselemente und vorzugsweise weniger als 50 % der Dichte der Verstärkungselemente ausmacht.

8. Luftreifen für ein Flugzeug nach einem der vorhergehenden Ansprüche, wobei die Verstärkungselemente der Karkasseneinlage Verbundkorde sind, die aus einem Faden aus aromatischem Polyamid mit einer längenbezogenen Masse zwischen 160 und 180 g pro km und zwei Fäden aus aliphatischem Polyamid mit einer längenbezogenen Masse zwischen 130 und 150 g pro km mit Verdrillungen zwischen 290 und 370 Umdrehungen pro Meter zusammengesetzt sind, wobei die Verstärkungselemente der Karkasseneinlage in Karkassenlagen verteilt sind und in den Karkassenlagen mit einer Schrittweite zwischen 0,6 mm und 0,9 mm angeordnet sind.

9. Luftreifen für ein Flugzeug nach einem der Ansprüche 1 bis 7, wobei die Verstärkungselemente der Karkasseneinlage Verbundkorde sind, die aus einem Faden aus aromatischem Polyamid mit einer längenbezogenen Masse zwischen 160 und 180 g pro km und einem Faden aus aliphatischem Polyamid mit einer längenbezogenen Masse zwischen 130 und 150 g pro km mit Verdrillungen zwischen 340 und 420 Umdrehungen pro Meter zusammengesetzt sind, wobei die Verstärkungselemente der Karkasseneinlage in Karkassenlagen verteilt sind und in den Karkassenlagen mit einer Schrittweite zwischen 0,6 mm und 0,9 mm, vorzugsweise zwischen 0,75 mm und 0,85 mm, angeordnet sind.

## Claims

1. Aircraft tyre having a tread (7), a crown reinforcement (6) and a radial carcass reinforcement (1),
• this radial carcass reinforcement (1) having **a plurality of carcass layers having textile reinforcing elements coated with rubber compounds** and oriented substantially radially, which is to say forming an angle of between 75° and 105° with the circumferential direction,
• the carcass layers being anchored in each bead (2) to at least one circumferential reinforcement or bead wire (3), each carcass layer having an end E (E11, E12, E13, E14) in each bead, each end E (E11, E12, E13, E14) being at a rubber-compound distance Epe (Epe11, Epe12, Epe13, Epe14) from the closest adjacent carcass layer,
• each carcass layer passing underneath the bead wire being, at its point radially on the inside of the centre of gravity (31) of the bead wire at a distance from the axis of rotation Rt (Rt11, Rt12, Rt13, Rt14), at a rubber-compound radial distance Ept (Ept11, Ept12, Ept13, Ept14) from the closest adjacent carcass layer, and having a thickness Et (Et11, Et12, Et13, Et14) at its point radially on the inside of the centre of gravity (31) of the bead wire,
• the reinforcing elements of the carcass layers having a diameter d,
• **characterized in that** the reinforcing elements of the carcass reinforcement (1) are composite cords comprising at least one aromatic polyamide filament yarn and of which the force at break is FR, measured in accordance with the standard D885/D885M - 10A (2014), and these elements exhibit a deformation at least equal to 4.8% for an applied force equal to FR/4,
• **in that** the tenacity of the reinforcing elements of the carcass reinforcement is at least equal to 80 daN/mm²,
• **in that** the ratio of the thickness Et (Et11, Et12, Et13, Et14) of each carcass layer to the diameter of the reinforcing elements, measured at the point radially on the inside of the centre of gravity (31) of the bead wire (3), is at least equal to 1.6 and at most equal to 2,
• **in that**, for each end of each carcass layer, the rubber-compound distance Epe (Epe11, Epe12, Epe13, Epe14) is at least equal to 90% and at most equal to 110% of the rubber-compound radial distance Ept (Ept11, Ept12, Ept13, Ept14) from the carcass layer in question to the closest adjacent layer $\left(0.9*Ept\leq Epe\leq 1.1*Ept\right) ,$
• **and in that** the linear density of the one or more aromatic polyamide filament yarns of the composite cords is at most equal to 210 tex.

2. Aircraft tyre according to Claim 1, wherein the radial reinforcing elements of the carcass reinforcement (1) exhibit a deformation at least equal to 5.3% for an applied force equal to FR/4.

3. Aircraft tyre according to either one of the preceding claims, wherein the radial reinforcing elements of the carcass reinforcement (1) are composite cords of which the force at break is FR, measured in accordance with the standard D885/D885M - 10A (2014), and these elements exhibit a deformation at most equal to 6.5% for an applied force equal to FR/4.

4. Aircraft tyre according to any one of the preceding claims, wherein the tenacity of the reinforcing elements of the carcass reinforcement is at most equal to 120 daN/mm².

5. Aircraft tyre according to any one of the preceding claims, with each carcass layer passing underneath the crown at a maximum radial distance Rm (Rm11, Rm12, Rm13, Rm14) and being at a rubber-compound radial distance Eps (Eps11, Eps12, Eps13, Eps14) from the closest adjacent carcass layer, wherein, for each carcass layer at the point radially on the inside of the centre of gravity (31) of the bead wire, the rubber-compound radial distance Ept (Ept11, Ept12, Ept13, Ept14) to the closest adjacent carcass layer is at least equal to 90% and at most equal to 110% of the rubber-compound radial distance Eps (Eps11, Eps12, Eps13, Eps14) from the carcass layer in question to the adjacent layer closest to the crown multiplied by the ratio of the radii Rt (Rt11, Rt12, Rt13, Rt14) to Rm (Rm11, Rm12, Rm13, Rm14) (irrespective of the carcass layer in question 0.9*Eps*(Rm/Rt)≤Ept≤1.1*Eps*(Rm/Rt)).

6. Aircraft tyre according to any one of the preceding claims, wherein the diameter is at most equal to 1450 mm.

7. Aircraft tyre according to any one of the preceding claims, wherein the aromatic polyamide represents less than 60% of the density of the reinforcing elements and preferably less than 50% of the density of the reinforcing elements.

8. Aircraft tyre according to any one of the preceding claims, wherein the reinforcing elements of the carcass reinforcement are composite cords made up of an aromatic polyamide filament yarn with a linear mass of between 160 and 180 g per km, and two aliphatic polyamide filament yarns with a linear mass of between 130 and 150 g per km, with twists of between 290 and 370 twists per metre, the reinforcing elements of the carcass reinforcement being distributed in carcass layers and disposed in said carcass layers at a pitch of between 0.6 mm and 0.9 mm.

9. Aircraft tyre according to any one of Claims 1 to 7, wherein the reinforcing elements of the carcass reinforcement are composite cords made up of one aromatic polyamide filament yarn with a linear mass of between 160 and 180 g per km, and one aliphatic polyamide filament yarn with a linear mass of between 130 and 150 g per km, with twists of between 340 and 420 twists per metre, the reinforcing elements of the carcass reinforcement being distributed in carcass layers and disposed in said carcass layers at a pitch of between 0.6 mm and 0.9 mm, preferably between 0.75 mm and 0.85 mm.
